# EUROPÄISCHE PATENTSCHRIFT

(11) **EP 2 546 097 B1**
(45) Veröffentlichungstag und Bekanntmachung des Hinweises auf die Patenterteilung: **16.12.2015**
(21) Anmeldenummer: 12153018.2
(22) Anmeldetag: 30.01.2012
(51) Int. Cl.: B60N 2/42, B60N 2/427, B60N 2/07

(54) **Crashantrieb für eine längsverschiebbare an einem Fahrzeugsitz angeordnete Fahrzeugsitzschiene**
Crash drive for a vehicle seat rail on a vehicle seat which can be adjusted longitudinally
Entraînement au crash pour un rail de véhicule agencé de manière coulissante en longueur sur un siège de véhicule

(43) Veröffentlichungstag der Anmeldung: 16.01.2013
(73) Patentinhaber: Metalsa Automotive GmbH, 51702 Bergneustadt (DE)
(72) Erfinder: Kern, Alexander, 51597 Morsbach (DE)
(74) Vertreter: Rebbereh, Cornelia

(56) Entgegenhaltungen:
- EP-A1- 2 374 656
- EP-A2- 0 737 604
- EP-A2- 1 106 481
- DE-A1-102010 062 550
- US-A- 3 992 046
- US-A- 5 626 203

## Beschreibung

Die Erfindung betrifft einen Crashantrieb für eine längsverschiebbar an einem Fahrzeugboden angeordnete Fahrzeugsitzschiene sowie eine Fahrzeugsitzschiene mit einem Crashantrieb.

Kraftfahrzeugsitze, insbesondere Pkw-Fahrzeugsitze werden üblicherweise über standardisierte, mit den Fahrzeugsitzen verbundene Fahrzeugsitzschienen mit dem Fahrzeugboden verbunden. Hierzu weisen die Fahrzeugböden in der Regel bereits entsprechende Befestigungspunkte, bspw. mit Gewinden versehene Bohrungen auf, die eine Befestigung der Fahrzeugsitzschiene am Fahrzeugboden ermöglichen. Im Falle von Unfällen ist die Ursache der auftretenden Verletzungen bei den Insassen der verunfallten Fahrzeuge grundsätzlich vielfältig. Eine häufige Verletzungsursache für Verletzungen im Bereich des Kopfes und der Wirbelsäule resultiert bei einem Heckaufprall auf ein Fahrzeug jedoch aus dem sogenannten Schleudertrauma, welches aus sich bei einem Fahrzeugaufprall ergebenden Beschleunigungen und einer Überstreckung des Kopfes resultiert. Dabei sind hierbei insbesondere die Fahrzeuginsassen betroffen, welche sich in dem Fahrzeug befinden, auf das ein anderes Fahrzeug im Heckbereich aufprallt.

Die das Schleudertrauma hervorrufenden Verletzungen resultieren dabei aus dem auch als Whiplash-Effekt beschriebenen Bewegungsablauf des Kopfes beim Unfall, wobei in Folge einer rückwärts gerichteten Bewegung eines Fahrzeuginsassen bei einem Heckaufprall zwar der Oberkörper durch die starre Rückenlehne abgefangen wird, der Kopf jedoch oberhalb des Nackens plötzlich abknickt, so dass es zu dem zuvor beschriebenen Schleudertrauma kommt.

Zur Verminderung der Unfallfolgen bei einem Heckaufprall existiert bereits eine Vielzahl von Lösungsansätzen. Neben der Verbesserung der Kopfstützen werden auch Systeme angeboten, die durch geeignete Ausgestaltung der Fahrzeugsitze die Verlagerbarkeit der Rückenlehne im Crashfall ermöglichen. Die Verlagerbarkeit der Rückenlehne soll dabei u. a. dazu dienen, eine engere Anlage des Fahrzeugsitzes an den Insassen und damit eine bessere Abstützung zu erreichen und/oder über eine rückwärts gerichtete Bewegung der Rückenlehne den Körper aufzufangen und die crashinduzierte Bewegung sanft abzubremsen, um so die aus dem abrupten Abbremsen der Rückbewegung resultierenden Kopfbeschleunigung zu reduzieren. Die bekannten Systeme betreffen jedoch den Fahrzeugsitz und setzen eine umfangreiche und kostenintensive Ausgestaltung desselben voraus, um eine im Crashfall bewegliche Anordnung, bspw. der Rückenlehne zu ermöglichen. Das Dokument DE102010062550 offenbart einen Crashantrieb mit den Merkmalen des Oberbegriffs des Anspruchs 1.

Hiervon ausgehend liegt der Erfindung die Aufgabe zugrunde, einen Antrieb zur Verlagerung des Fahrzeugsitzes im Crashfall sowie eine Fahrzeugsitzschiene bereitzustellen, welche im Crashfall eine definierte Verlagerung des Fahrzeugsitzes ermöglicht.

Die Erfindung löst die Aufgabe durch einen Crashantrieb mit den Merkmalen des Anspruchs 1 sowie durch eine Fahrzeugsitzschiene mit den Merkmalen des Anspruchs 14. Vorteilhafte Weiterbildungen der Erfindung sind in den abhängigen Ansprüchen angegeben.

Wesentlich für den erfindungsgemäßen Crashantrieb ist die Verwendung einer längsverschiebbar an einem Fahrzeugboden angeordnete Fahrzeugsitzschiene. Der erfindungsgemäße Crashantrieb, der einen mit dem Fahrzeugboden verbindbaren, zwischen einer Ruhelage und einer Crashlage längsverschiebbar an der Fahrzeugsitzschiene anordbaren Grundträger, eine ortsfest mit der Fahrzeugsitzschiene verbindbare Antriebseinheit und einen durch die Antriebseinheit zwischen einer Ablageposition und einer Stellposition an der Antriebseinheit angeordneten Antriebskörper, der derart mit dem Grundträger verbunden ist, dass eine Verstellung des Antriebskörpers aus der Ablageposition in die Stellposition eine Verlagerung des Grundträgers aus der Ruhelage in die Crashlage bewirkt, aufweist, ist, dass durch den Crashantrieb über eine Verschiebung der Fahrzeugsitzschiene gegenüber dem Fahrzeugboden im Crashfall eine definierte Verlagerung des gesamten Fahrzeugsitzes erfolgen kann.

Der Crashantrieb dient dabei dazu, die längsverschiebbar am Fahrzeugboden gelagerte Fahrzeugsitzschiene über einen definierten Bewegungsbereich - bezogen auf die Einbaulage eines Fahrzeugsitzes im Fahrzeug - in Richtung auf die Fahrzeugfront zu bewegen. Durch die Bewegung des Fahrzeugsitzes wird erreicht, dass der Fahrzeugsitz mit seiner Rückenlehne in Richtung auf eine auf dem Fahrzeugsitz angeordnete Person bewegt wird, wodurch die Rückenlehne enger an dem Rücken des Insassen anliegt und dem Rücken sowie ebenfalls dem Kopf eine bessere Abstützung und damit einen besseren Schutz vor dem Whiplash-Effekt bietet.

Die Erfindung macht sich dabei u. a. den Umstand zu Nutzen, dass es nach erfolgtem Heckaufprall aufgrund der Trägheitseffekte zu einer Verzögerung kommt, bis die beim Heckaufprall wirkenden Kräfte auf die Insassen wirken. Der Crashantrieb ist derart ausgelegt, dass innerhalb des Verzögerungszeitraums durch den Crashantrieb eine Verlagerung der Fahrzeugsitzschiene und damit des gesamten Fahrzeugsitzes erfolgt.

Ein weiterer Effekt der erfindungsgemäßen Ausgestaltung kann darin bestehen, dass durch die Verlagerung der Fahrzeugsitzschiene und der damit einhergehenden Verlagerung des gesamten Fahrzeugsitzes die Fahrzeuginsassen zudem - bezogen auf die Einbaulage des Fahrzeugsitzes - nach vorne beschleunigt werden. So kann bei einer frühzeitigen Auslösung, bspw. kurz vor einem Unfall (Pre-Crash) und/oder einer unmittelbar beim Heckaufprall erfolgenden Auslösung eine Beschleunigung der auf den Fahrzeugsitz angeordneten Person in Fahrtrichtung bewirkt werden, welche geeignet ist, um die durch den Heckaufprall wirkende, entgegengesetzte Beschleunigung auszugleichen, so dass im Idealfall bei betragsmäßig gleicher Beschleunigung die durch den Heckaufprall entstehende Beschleunigung durch die zuvor durch die Verlagerung des Fahrzeugsitzes bewirkte Beschleunigung ausgeglichen wird.

Wesentlich für den erfindungsgemäßen Crashantrieb ist dabei eine Antriebseinheit, welche sensorgesteuert unmittelbar beim Erkennen eines Heckaufpralls oder kurz davor die Antriebsenergie zur Verlagerung der Fahrzeugsitzschiene bereitstellt. Erfindungsgemäß weist der Crashantrieb dabei zur Verlagerung der längsverschiebbar an dem Fahrzeugboden angeordneten Fahrzeugsitzschiene einen Grundträger auf, welcher seinerseits relativ gegenüber der Fahrzeugsitzschiene längsverschiebbar an dieser gelagert ist. Der Grundträger ist mit einem Antriebskörper verbunden, welcher verschiebbar an der Antriebseinheit des Crashantriebs gelagert ist, wobei die Antriebseinheit ortsfest mit der Fahrzeugsitzschiene verbunden ist.

Durch eine Aktivierung der Antriebseinheit erfolgt eine Verlagerung des Antriebskörpers, welche aufgrund der Verbindung des Antriebskörpers mit dem Grundträger auf diesen übertragen wird. Die ortsfeste Anordnung des Grundträgers am Fahrzeugboden und der Antriebseinheit an der Fahrzeugsitzschiene sowie die längsverschiebbare Anordnung der Fahrzeugsitzschiene am Fahrzeugboden führt daher bei einer Aktivierung der Antriebseinheit dazu, dass die Fahrzeugsitzschiene relativ gegenüber dem Grundträger verlagert wird, wobei der längenmäßige Betrag der Verlagerung von dem Verfahrweg des Antriebskörpers aus der Ablageposition in dessen Stellposition abhängt. Eine zuverlässige Verlagerung wird dabei dadurch gewährleistet, dass der Grundträger ortsfest mit dem Fahrzeugboden und die Antriebseinheit ortsfest mit der Fahrzeugsitzschiene verbunden ist, so dass eine Verstellung des Antriebskörpers aus der Ablageposition in die Stellposition eine Verlagerung des Grundträgers aus der Ruhelage in die Crashlage bewirkt.

Der erfindungsgemäße Crashantrieb lässt sich besonders einfach und kostengünstig ausgestalten und erfordert nur eine geringfügige Anpassung der Fahrzeugsitzschiene dahingehend, dass diese längsverschiebbar am Fahrzeugboden anordbar ist. Durch die durch den Crashantrieb hervorgerufene Bewegung des Fahrzeugsitzes können Verletzungen im Falle eines Heckaufpralls in erheblichem Umfang verhindert oder zumindest die Schwere der Verletzungen deutlich verringert werden. Die vorteilhafterweise vorgesehene Möglichkeit der Verbindung der Antriebseinheit mit bestehenden Crashsensoren am Fahrzeug ermöglicht eine besonders kostengünstige Ausgestaltung des Crashantriebs.

Im normalen Fahrbetrieb des Kraftfahrzeuges ist der Crashantrieb derart mit der Fahrzeugsitzschiene und dem Fahrzeugboden verbunden, dass keine unerwünschte Verlagerung des Fahrzeugsitzes gegenüber dem Fahrzeugboden erfolgen kann. Die Ausgestaltung der Lagesicherung kann dabei grundsätzlich in beliebiger Weise erfolgen. Nach einer besonders vorteilhaften Ausgestaltung der Erfindung ist jedoch eine den Grundträger in der Ruhelage in Verstellrichtung formschlüssig an der Fahrzeugsitzschiene festlegende Verriegelungseinheit vorgesehen, die zwischen einer Sperrlage und einer Freigabestellung verstellbar ist.

Die Verwendung einer Verriegelungseinheit gewährleistet in besonders zuverlässiger Weise, dass der Grundträger, welcher zur ortsfesten Verbindung mit dem Fahrzeugboden ausgebildet ist, im normalen Fahrbetrieb relativ gegenüber der Fahrzeugsitzschiene in der Ruhelage verbleibt. Über die formschlüssige Verbindung zwischen dem Grundträger und der Fahrzeugsitzschiene sowie die ortsfeste Anordnung des Grundträgers an dem Fahrzeugboden wird eine Längsverschiebung des Fahrzeugsitzes zuverlässig verhindert. Um eine Verlagerung des Grundträgers gegenüber der Fahrzeugsitzschiene zu ermöglichen, ist die Verriegelungseinheit hierzu zwischen einer Sperrlage und einer Freigabestellung verstellbar, wobei in der Sperrlage die Verriegelungseinheit den Grundträger formschlüssig an der Fahrzeugsitzschiene arretiert und in der Freigabestellung eine Verlagerung der Fahrzeugsitzschiene gegenüber dem Grundträger möglich ist.

Grundsätzlich kann bereits durch eine einfache, durch den Crashantrieb hervorgerufene Verlagerung der Fahrzeugsitzschiene in - bezogen auf die Einbaulage - Richtung auf die Fahrzeugfront der zuvor beschriebene positive Effekt für die Fahrzeuginsassen erreicht werden. Eine weitere Reduzierung der Wahrscheinlichkeit von Verletzungen kann durch die vorteilhafterweise vorgesehen Möglichkeit der Rückverlagerung des Fahrzeugsitzes, die mit einer Verlagerung des Grundträgers aus der Crashlage in Richtung auf die Ruhelage einhergeht, erreicht werden, wobei aufgrund der Bewegung die beim Crash auftretenden Bewegungsenergien abgebaut werden können. Erfindungsgemäß ist eine die Bewegung des Grundträgers aus der Crashlage in Richtung auf die Ruhelage dämpfende Dämpfungseinheit vorgesehen. Die Verwendung einer Dämpfungseinheit erlaubt es, im Falle einer Rückbewegung des Fahrzeugsitzes in Richtung auf dessen Ausgangslage, wobei der Grundträger aus der Crashlage in Richtung auf die Ruhelage bewegt wird, einen erhöhten Energieabbau zu erreichen. Die Ausgestaltung der die Bewegung dämpfenden Dämpfungseinheit kann dabei grundsätzlich in beliebiger Weise erfolgen. Durch die Dämpfungseinheit kann dabei in besonders vorteilhafter Weise eine durch den Heckaufprall bewirkte Rückbewegung in ihrem Verlauf festgelegt werden, so dass ein besonders hoher Energieabbau bei gleichzeitig geringer Belastung für die Fahrzeuginsassen erreicht werden kann.

Die Ausgestaltung der Antriebseinheit derart, dass diese im Crashfall in geforderter Weise kurzfristig die erforderliche Antriebsenergie bereitstellt, ist grundsätzlich frei wählbar. So können hierzu bspw. vorgespannte Systeme benutzt werden, welche über geeignete Ausgestaltungen den Antriebskörper lösbar zuverlässig in der Ablageposition halten.

Erfindungsgemäß weist die Antriebseinheit einen pyrotechnischen Aktuator auf, der derart ausgebildet ist, dass dessen Aktivierung eine Verlagerung des Antriebskörpers aus der Ablageposition in die Stellposition bewirkt. Die Verwendung eines pyrotechnischen Aktuators zeichnet sich dabei dadurch aus, dass im Falle dessen Aktivierung die sich durch die Expansion ergebende Antriebsenergie kurzfristig zur Verfügung steht und somit eine unmittelbar nach einer Auslösung erzeugte Verschiebung der Fahrzeugsitzschiene bewirkt. Darüber hinaus lässt sich der pyrotechnische Aktuator besonders einfach und kostengünstig anordnen und weist eine hohe Zuverlässigkeit auf.

Die Anordnung des pyrotechnischen Aktuators an der Antriebseinheit sowie die Art der Nutzung dessen Antriebsenergie sind grundsätzlich frei wählbar. Nach einer besonders vorteilhaften Ausgestaltung der Erfindung ist jedoch vorgesehen, dass der pyrotechnische Aktuator druckdicht mit einer einen Druckraum aufweisenden Zylindereinheit verbunden ist, innerhalb der ein als Kolbenelement ausgebildeter Antriebskörper längsverschiebbar gelagert ist. Diese Ausgestaltung zeichnet sich durch ihren besonders einfachen Aufbau aus, wobei sich im Falle einer Aktivierung des pyrotechnischen Aktuators innerhalb des Druckraums schlagartig eine erhöhter Druck aufbaut, welcher unmittelbar zu einer Verlagerung des als Kolbenelement ausgebildeten Antriebskörpers führt, so dass die Bewegung des Kolbenelements zur Verlagerung des mit dem Kolbenelement verbundenen Grundträgers genutzt werden kann.

Die Verwendung einer zuvor beschriebenen Dämpfungseinheit ermöglicht es, den sich bietenden Bewegungsspielraum nach einer Vorverlagerung der Fahrzeugsitzschiene dazu zu nutzen, um die beim Heckaufprall auftretende Beschleunigung über die Rückbewegung abzubauen. Die Ausgestaltung der Dämpfungseinheit ist dabei grundsätzlich frei wählbar. Nach einer besonders vorteilhaften Ausgestaltung der Erfindung ist jedoch vorgesehen, dass der Antriebskörper im Bereich um die Stellposition derart mit einer Dämpfungseinheit zusammenwirkt, dass diese aus einer wirkungslosen Position in eine Wirkposition verstellt wird.

Gemäß dieser Ausgestaltung der Erfindung ist die Dämpfungseinheit derart ausgestaltet, dass im Falle einer Bewegung des Grundträgers aus der Ruhelage in die Crashlage durch die Dämpfungseinheit kein Einfluss auf den Bewegungsablauf ausgeübt wird. Die Verlagerung des Grundträgers aus der Ruhelage in die Crashlage, wobei die Fahrzeugsitzschiene in - bezogen auf die Einbaulage - Richtung auf die Fahrzeugfront bewegt wird, kann somit ungehindert besonders schnell erfolgen. Erst wenn der Antriebskörper die Stellposition erreicht, erfolgt eine Aktivierung der Dämpfungseinheit, wobei der Antriebskörper im Bereich um die Stellposition die Dämpfungseinheit aus einer wirkungslosen Position in eine Wirkposition verstellt. In der Wirkposition ist die Dämpfungseinheit aktiviert und dämpft dann eine Rückbewegung des Antriebskörpers aus der Crashlage in die Ruhelage, wobei die Fahrzeugsitzschiene in ihre Ausgangsposition rückverlagert wird. Über den Grad der Dämpfung kann dabei der mögliche Energieabbau bestimmt werden. Diese Ausgestaltung der Erfindung ermöglicht es, auf separate Elemente zur Aktivierung einer Dämpfungseinheit zu verzichten. Auch wird einer Fehlauslösung der Dämpfungseinheit wirksam vorgebeugt, da erst nach Erreichen des Bereichs um die Stellposition der Antriebskörper die Dämpfungseinheit aktiviert.

Die Ausgestaltung der Dämpfungseinheit ist grundsätzlich frei wählbar. Nach einer besonders vorteilhaften Weiterbildung der Erfindung ist jedoch vorgesehen, dass die Dämpfungseinheit im Bereich des offenen Endes der Zylindereinheit innerhalb des Druckraums derart mit einem Anschlagelement des Antriebskörpers im Bereich der Stellposition zusammenwirkt, dass die Dämpfungseinheit in die Wirkposition verstellt wird. Gemäß dieser Ausgestaltung der Erfindung erfolgt eine Verstellung der Dämpfungseinheit im Bereich des offenen Endes der Zylindereinheit mit einem Anschlagelement des Antriebskörpers, wenn dieser im Bereich der Stellposition angeordnet ist. Durch diese Ausgestaltung wird besonders zuverlässig gewährleistet, dass die Dämpfungseinheit erst bei Erreichen eines Bereichs um die Stellposition durch den Antriebskörper aktiviert wird. Fehlauslösungen oder einer vorzeitigen Auslösung der Dämpfungseinheit kann somit besonders wirkungsvoll vorgebeugt werden.

Die konkrete Ausgestaltung der Dämpfungseinheit derart, dass diese aus einer wirkungslosen Position in eine Wirkposition verstellt wird, ist ebenfalls grundsätzlich frei wählbar. Nach einer besonders vorteilhaften Ausgestaltung der Erfindung ist jedoch vorgesehen, dass die Dämpfungseinheit einen koaxial zum Antriebskörper angeordneten Konusring sowie ein im Bereich der Verstellposition mit dem Antriebskörper in Eingriff bringbares und damit auf den Konusring aufschiebbares Ringelement aufweist, das derart ausgebildet ist, dass im aufgeschobenen Zustand das Ringelement und der Konusring kraft- und/oder formschlüssig mit dem Antriebskörper und der Innenwand der Zylindereinheit in Eingriff befindlich sind.

Gemäß dieser Ausgestaltung der Erfindung wird die Dämpfungseinheit durch den Konusring und das auf den Konusring aufschiebbare Ringelement gebildet. Im unaufgeschobenen Zustand lässt sich der Antriebskörper relativ gegenüber dem Konusring und/oder mit dem Konusring relativ gegenüber der Antriebseinheit im Wesentlichen reibungsfrei verlagern, so dass die Bewegung des Antriebskörpers durch die Dämpfungseinheit nicht behindert wird. Im Bereich der Stellposition jedoch bewirkt der Antriebskörper ein Aufschieben des Ringelements auf den Konusring, wodurch sich der Gesamtdurchmesser von Konusring und Ringelement vergrößert und zudem der Konusring auf den Antriebskörper gepresst wird. Im Falle einer Rückverlagerung des Antriebskörpers aus seiner Stellposition in Richtung auf die Ablageposition besteht daher eine Reibung zwischen der Innenwand der Zylindereinheit und dem System aus Ringelement und Konusring, wodurch eine Dämpfung der Bewegung erreicht wird. Die Verbindung mit dem Antriebskörper kann dabei allein auf einer kraftschlüssigen Verbindung basieren, bei einer entsprechenden Ausgestaltung des Antriebskörpers jedoch auch formschlüssig erfolgen, wobei hierzu der Konusring zumindest abschnittsweise an entsprechenden Ausnehmungen, bspw. einer Nut des Antriebskörpers anliegt.

Auch kann die Dämpfungseinheit, vorzugsweise der Konusring und das Ringelement derart ausgebildet sein, dass diese in ihrer Wirkposition im Falle einer Rückverlagerung nicht lediglich nur in reibschlüssiger Verbindung mit der Innenwand befindlich ist, sondern eine Rückverlagerung überdies eine Verformung der Zylindereinheit erfordert. Hierdurch kann die Möglichkeit zum Energieabbau in ergänzender Weise gesteigert werden.

Die voran dargestellte Ausgestaltung der Dämpfungseinheit lässt sich in besonders einfacher und kostengünstiger Weise ausgestalten und weist zudem eine hohe Zuverlässigkeit auf. Eine dämpfende Wirkung von Konusring und Ringelement wird erst nach einem Aufschieben des Ringelements auf den Konusring erreicht, wobei der Vorgang des Aufschiebens erst durch den Antriebskörper im Bereich um dessen Stellposition erfolgt. Die grundsätzliche Anordnung der Dämpfungseinheit innerhalb der Zylindereinheit weist überdies den Vorteil auf, dass die Zylindereinheit eine doppelte Funktion erfüllt. Zum einen stellt sie einen Druckraum zur Verfügung. Zum anderen wirkt sie mit der Dämpfungseinheit zusammen, so dass auf weitere Bauteile verzichtet werden kann.

Wie bereits eingangs dargestellt, kann die Dämpfungseinheit grundsätzlich in beliebiger Weise ausgestaltet sein. Nach einer weiteren Ausgestaltung der Erfindung ist es jedoch vorgesehen, dass die Dämpfungseinheit ein im Bereich des offenen Endes der Zylindereinheit angeordnetes, an der Innenwand anliegendes und/oder abschnittsweise in eine Öffnung der Zylindereinheit vorstehendes Dämpfungselement aufweist, wobei der Antriebskörper und das Dämpfungselement derart ausgebildet sind, dass diese im Bereich der Stellposition des Antriebskörpers kraft- und/oder formschlüssig in Eingriff gelangen. Gemäß dieser Ausgestaltung der Erfindung ist vorgesehen, dass ein Dämpfungselement im Bereich des offenen Endes der Zylindereinheit angeordnet ist und erst bei Erreichen der Stellposition des Antriebskörpers mit diesem in Eingriff gelangt.

Insofern erfolgt die Bewegung des Antriebskörpers aus der Ablageposition in die Stellposition unbeeinflusst durch das Dämpfungselement. Erst im Bereich der Stellposition gelangt das Dämpfungselement derart mit dem Antriebskörper in Eingriff, dass bei einer Rückverlagerung des Antriebskörpers in Richtung auf die Ablageposition das Dämpfungselement innerhalb der Zylindereinheit rückverlagert wird. Das Dämpfungselement kann dabei derart ausgestaltet sein, dass lediglich eine reibschlüssige Verbindung zwischen der Innenwand und dem Dämpfungselement besteht. Es besteht jedoch auch die Möglichkeit einer Ausgestaltung, wonach das Dämpfungselement derart ausgestaltet ist, dass eine Rückverlagerung nur durch eine Verformung der Zylindereinheit möglich ist. Hierzu kann das Dämpfungselement bspw. derart ausgebildet sein, dass es abschnittsweise in eine Öffnung der Zylindereinheit vorsteht, so dass der Außendurchmesser des Dämpfungselements größer ist als der Innendurchmesser der Zylindereinheit. Nachdem eine Rückverlagerung des Antriebskörpers aus der Stellposition in die Ablageposition folglich eine Verformung der Zylindereinheit erforderlich macht, ist vorzugsweise vorgesehen, dass das Dämpfungselement in der Stellposition mit dem Antriebskörper in formschlüssigem Eingriff gelangt, um so zuverlässig über die Rückverlagerungsbewegung des Antriebskörpers zu gewährleisten, dass dieser mit dem Dämpfungselement in Eingriff verbleibt und so einen hohen Energieabbau ermöglicht.

Die Ausgestaltung der Verriegelungseinheit zur lagesicheren Anordnung des Grundträgers an der Fahrzeugsitzschiene im normalen Fahrbetrieb ist grundsätzlich frei wählbar. Nach einer besonders vorteilhaften Ausgestaltung der Erfindung ist jedoch vorgesehen, dass die Verriegelungseinheit mindestens ein, vorzugsweise zwei Verriegelungselemente, insbesondere Sperrstifte aufweist, die zwischen der Sperrlage, in der das Verriegelungselement von dem Grundträger in Richtung auf die Fahrzeugsitzschiene vorsteht, und der Freigabestellung, in der das Verriegelungselement in Richtung auf den Grundträger rückverlagert ist, verstellbar ist.

Diese Ausgestaltung der Erfindung lässt eine besonders einfache und zuverlässige Lagesicherung des Grundträgers an der Fahrzeugsitzschiene zu, wobei hierzu die Sperrstifte mit geeigneten Öffnungen an der Fahrzeugsitzschiene zusammenwirken können. Die sich damit einstellende formschlüssige Lagesicherung gewährleistet besonders zuverlässig, dass im normalen Fahrbetrieb keine Verlagerung der Fahrzeugsitzschiene gegenüber dem Fahrzeugboden stattfindet. Die Möglichkeit das Verriegelungselement in Richtung auf den Grundträger rückzuverlagern erlaubt es, dieses mit geeigneten Öffnungen an der Fahrzeugsitzschiene außer Eingriff zu bringen, so dass dann der Grundträger relativ gegenüber der Fahrzeugsitzschiene verlagert werden kann.

Eine derart weitergebildete Verriegelungseinheit zeichnet sich durch einen besonders einfachen sowie kostengünstigen Aufbau auf, wobei dieser zudem eine hohe Zuverlässigkeit der Lagesicherung des Grundträgers an der Fahrzeugsitzschiene im normalen Fahrbetrieb gewährleistet. Gleichzeitig lässt diese Ausgestaltung eine einfache Entriegelung zu, so dass ebenfalls gewährleistet werden kann, dass es im Falle einer Aktivierung zu einer umgehenden Verlagerung kommt. Besonders vorteilhafterweise ist zur besonders zuverlässigen Lagesicherung dabei vorgesehen, dass die Verriegelungselemente in Richtung auf die Sperrlage vorgespannt sind, wobei hierzu grundsätzlich alle Arten von Vorspannelementen, bspw. Federelemente verwendet werden können.

Im Falle der Verwendung einer Verriegelungseinheit ist es erforderlich, diese zu entriegeln, um eine Verlagerung der Fahrzeugsitzschiene durch den Crashantrieb zu ermöglichen. Grundsätzlich können zur Entriegelung beliebige Systeme verwendet werden. Nach einer besonders vorteilhaften Ausgestaltung der Erfindung ist jedoch eine die Verriegelungseinheit verstellende Betätigungseinheit vorgesehen, die mit der Verriegelungseinheit und der Antriebseinheit derart in Wirkverbindung befindlich ist, dass eine Verstellung des Antriebskörpers aus der Ablageposition in Richtung auf die Stellposition eine Verstellung der Verriegelungseinheit in die Freigabestellung bewirkt. Gemäß dieser Ausgestaltung der Erfindung wird zu Beginn der Bewegung des Antriebskörpers aus der Ablageposition in die Stellposition die stattfindende Verlagerung des Antriebskörpers dazu genutzt, um zunächst eine Entriegelung der Verriegelungseinheit zu bewirken. Diese Ausgestaltung gewährleistet in besonders zuverlässiger Weise, dass es nach einer Aktivierung der Antriebseinheit und einer damit einhergehenden Verstellung des Antriebskörpers zunächst zuverlässig zu einer Entriegelung und dann zu einer Verlagerung kommt. Eine Synchronisierung mit alternativ verwendbaren separaten Entriegelungssystemen kann in diesem Fall entfallen, da die sich einstellende Bewegung des Antriebskörpers zunächst dazu genutzt wird, um die Verriegelungseinheit zu entriegeln.

Obgleich die Ausgestaltung der Kopplung des Antriebskörpers mit der Verriegelungseinheit zur Entriegelung der Verriegelungseinheit grundsätzlich beliebig ausgestaltet sein kann, ist nach einer besonders vorteilhaften Ausgestaltung der Erfindung vorgesehen, dass hierzu der Antriebskörper in einem begrenzten Bereich um die Ablageposition relativ gegenüber dem Grundträger verstellbar ist. Der Bereich der relativen Verstellbarkeit ist dabei derart bemessen, dass durch die Verstellbarkeit eine Verlagerung der Verriegelungseinheit aus der Sperrlage in die Freigabestellung bewirkt wird. Gemäß dieser Ausgestaltung findet zunächst eine Verlagerung des Antriebskörpers statt, der nicht zu einer Verlagerung des Grundträgers führt, sondern nur dazu dient, die Verriegelungseinheit zu entriegeln. Einem Verklemmen oder Verkanten, bspw. des Antriebskörpers mit dem Grundträger oder des Grundträgers an der Fahrzeugsitzschiene kann durch diese Ausgestaltung besonders zuverlässig vorgebeugt werden, nachdem zunächst eine zuverlässige Entriegelung bewirkt wird und nach Beendigung der Relativbewegung dann die Bewegung unmittelbar von dem Antriebskörper auf den Grundträger übertragen wird.

Die ortsfeste Anordnung des Grundträgers an dem Fahrzeugboden kann grundsätzlich in beliebiger Weise erfolgen. Nach einer besonders vorteilhaften Ausgestaltung der Erfindung ist jedoch vorgesehen, dass der Grundträger ein Befestigungselement, vorzugsweise eine Befestigungsschraube zur Lagesicherung des Grundträgers an einem Fahrzeugboden aufweist. Diese Ausgestaltung des Grundträgers lässt sich besonders einfach und kostengünstig herstellen und erlaubt bei der Verwendung standardisierter Schrauben einen einfachen Anbau des Grundträgers an dem Fahrzeugboden.

Zur Lagesicherung der Antriebseinheit, insbesondere der Zylindereinheit an der Fahrzeugsitzschiene ist nach einer besonders vorteilhaften Weiterbildung vorgesehen, dass die Antriebseinheit, insbesondere die Zylindereinheit Befestigungsmittel zur Lagesicherung der Antriebseinheit der Fahrzeugsitzschiene aufweist, so dass auf separate Verbindungsmittel verzichtet werden kann. Diese Ausgestaltung der Erfindung erlaubt eine besonders einfache und kostengünstige Montage des Crashantriebs an einer Fahrzeugsitzschiene.

Kennzeichnend für eine erfindungsgemäße Fahrzeugsitzschiene mit einem Crashantrieb ist, dass ein Befestigungselement eines Grundträgers, insbesondere eine Befestigungsschraube des Crashantriebs innerhalb eines Langloches eines Bodenbereichs der Fahrzeugsitzschiene angeordnet ist. Die Ausgestaltung der Fahrzeugsitzschiene mit einem Langloch ermöglicht es in besonders einfacher Weise, die Fahrzeugsitzschiene längsverschiebbar am Fahrzeugboden anzuordnen. Die Verschiebbarkeit der Fahrzeugsitzschiene gegenüber dem Fahrzeugboden ergibt sich dabei aus der Länge des Langlochs, wobei der Verschiebebereich durch die Anlagepunkte des Befestigungselements des Grundträgers an dem gegenüberliegenden Ende des Langlochs begrenzt ist. Diese Ausgestaltung der Fahrzeugsitzschiene lässt sich besonders einfach und kostengünstig herstellen, wobei die Fahrzeugsitzschiene gegenüber bekannten Fahrzeugsitzschienen zur Anordnung des Crashantriebs lediglich mit einem Langloch versehen sein muss.

Zur Lagesicherung der Fahrzeugsitzschiene im normalen Fahrbetrieb in dem eine Verschiebung der Fahrzeugsitzschiene unerwünscht ist, ist nach einer weiteren Ausgestaltung der Erfindung vorgesehen, dass ein Verriegelungselement, insbesondere ein Sperrstift einer Verriegelungseinheit des Crashantriebs in einer Sperrlage in einer entsprechenden Öffnung an der Fahrzeugsitzschiene angeordnet ist. Über die Verwendung einer Verriegelungseinheit, insbesondere von Sperrelementen und dabei vorzugsweise von Sperrstiften wird gewährleistet, dass die Fahrzeugsitzschiene in der Normallage über den Grundträger, welcher mit der Fahrzeugsitzschiene über die Sperrstifte formschlüssig verbunden ist, zuverlässig arretiert ist. Einer versehentlichen Längsverschiebung der Fahrzeugsitzschiene wird somit in besonders wirkungsvoller Weise vorgebeugt, nachdem die Fahrzeugsitzschiene über die Sperrelemente an dem Grundträger arretiert ist. Die Verriegelungselemente, insbesondere die Sperrstifte können dabei in entsprechenden Öffnungen an der Fahrzeugsitzschiene angeordnet sein, wobei diese auch an einem Ende des Langloches anliegen können, um eine Lagesicherung zu gewährleisten.

Ein Ausführungsbeispiel der Erfindung wird nachstehend mit Bezug auf die Zeichnungen näher erläutert. In den Zeichnungen zeigen:
- Fig. 1, 1a: eine perspektivische Ansicht eines Abschnitts einer Fahrzeugsitzschiene mit einem daran angeordneten Crashantrieb in einer Crashlage eines Grundträgers;
- Fig. 2: eine perspektivische Ansicht auf eine Unterseite der Fahrzeugsitzschiene und des Crashantriebs von Fig. 1 in der Crashlage des Grundträgers;
- Fig. 2a: eine perspektivische Ansicht auf eine Unterseite der Fahrzeugsitzschiene und des Crashantriebs von Fig. 1 in einer Ruhelage des Grundträgers;
- Fig. 3: eine Seitenansicht auf den Crashantrieb und die Fahrzeugsitzschiene von Fig. 1 in der Crashlage des Grundträgers;
- Fig. 4: eine vergrößerte Ansicht einer Dämpfungseinheit des Crashantriebs von Fig. 1 ohne die Darstellung einer Zylindereinheit in der Crashlage des Grundträgers;
- Fig. 5a: eine Draufsicht auf die Fahrzeugsitzschiene und den Crashantrieb von Fig. 1 in der Crashlage des Grundträgers;
- Fig. 5b: eine Draufsicht der Fahrzeugsitzschiene und des Crashantriebs ohne die Darstellung der Zylindereinheit in der Crashlage des Grundträgers;
- Fig. 6a: ein Schnitt einer Seitenansicht der Fahrzeugsitzschiene und des Crashantriebs von Fig. 1 in der Ruhelage des Grundträgers;
- Fig. 6b: ein Schnitt einer Seitenansicht der Fahrzeugsitzschiene und des Crashantriebs von Fig. 1 in der Crashlage des Grundträgers;
- Fig. 7: eine vergrößerte Darstellung der Dämpfungseinheit von Fig. 4 im gerade noch nicht aktivierten Zustand;
- Fig. 8: eine vergrößerte Darstellung der Dämpfungseinheit von Fig. 7 im aktivierten Zustand;
- Fig. 9: eine perspektivische Ansicht einer Fahrzeugsitzschiene mit Crashantrieb in einer Ruhelage;
- Fig. 9a: eine vergrößerte perspektivische Ansicht des Abschnitts der Fahrzeugsitzschiene mit daran angeordnetem Crashantrieb in einer Ruhelage des Grundträgers;
- Fig. 10: eine perspektivische Darstellung eines Endabschnitts eines Antriebskörpers mit einem daran angeordneten Dämpfungselement;
- Fig. 11: eine Schnittansicht der Zylindereinheit im Bereich ihres offenen Endes mit einem im Bereich einer Stellposition angeordneten Antriebskörper im Eingriff mit dem Dämpfungselement von Fig. 10 und
- Fig. 11a: eine Schnittansicht 90° gedreht des Antriebskörpers und des Dämpfungselements von Fig. 11 ohne Zylindereinheit.

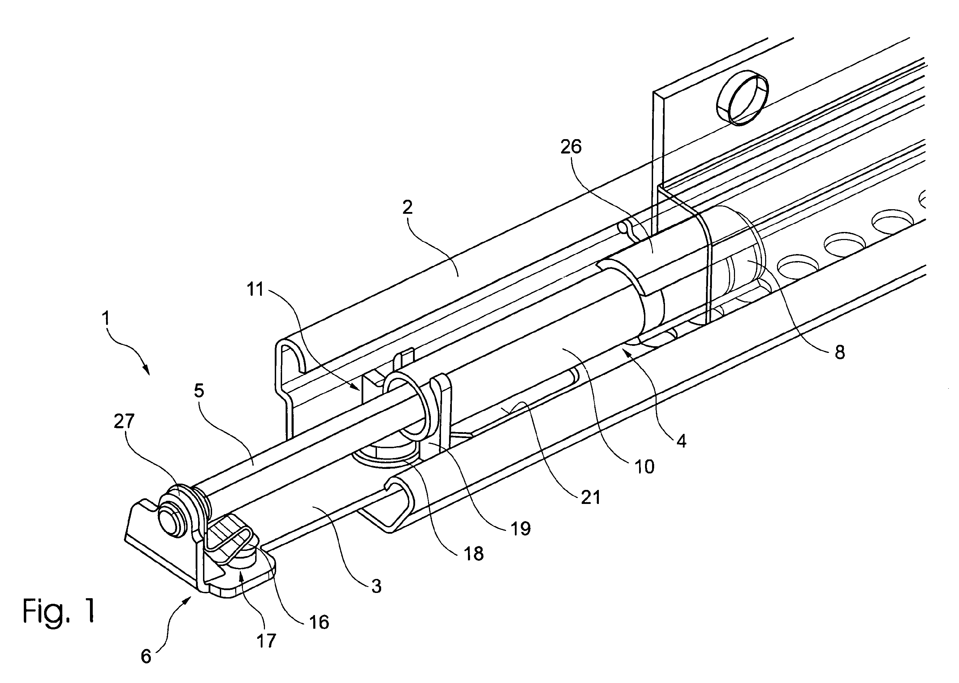

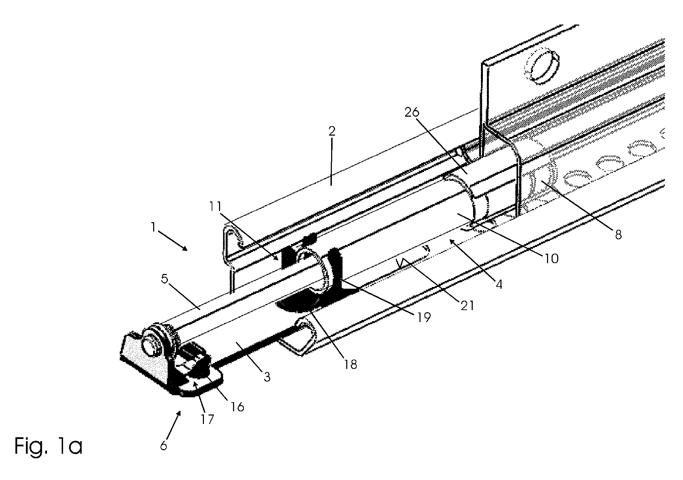

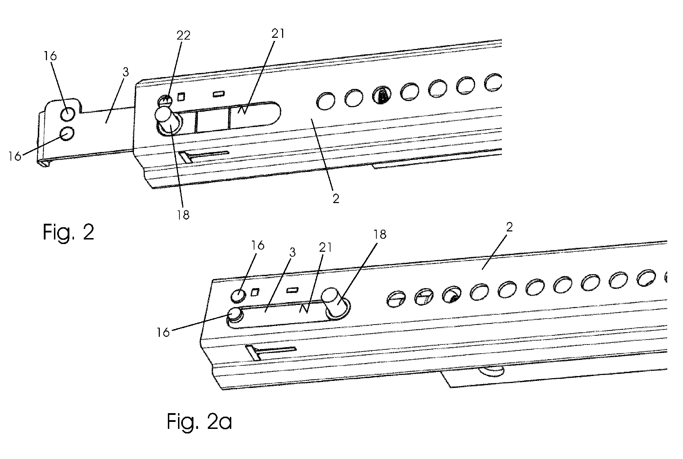

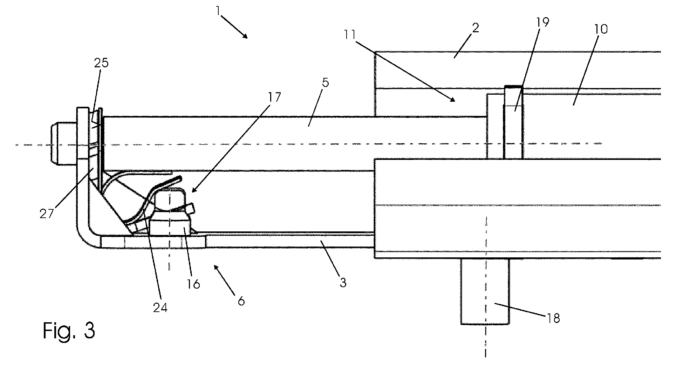

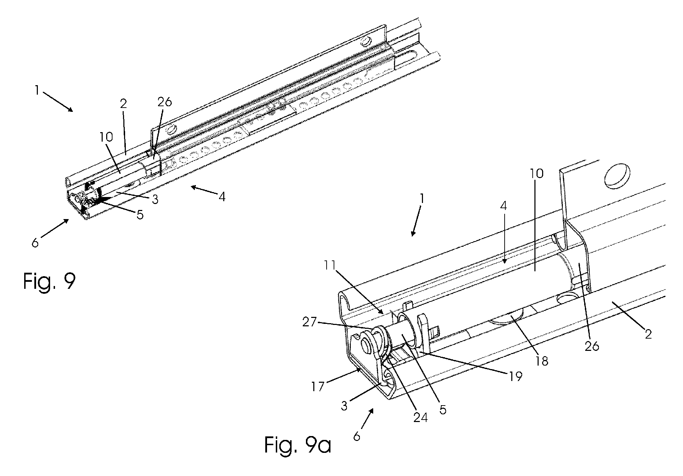

Fig. 1 und 1a zeigen in einer ersten perspektivischen Ansicht einen im Endbereich einer Fahrzeugsitzschiene 2 angeordneten, in einer aktivierten Position befindlichen Crashantrieb 1. Der Crashantrieb 1 weist zur Befestigung an der Fahrzeugsitzschiene 2 einen Grundträger 3 auf, welcher mit einem hier nicht dargestellten Fahrzeugboden über eine Befestigungsschraube 18 verschraubbar ist. Der Grundträger 3 und die Fahrzeugsitzschiene 2 sind dabei derart miteinander verbunden, dass die Fahrzeugsitzschiene 2 relativ gegenüber dem Grundträger 3 längs verschiebbar ist, wobei der Grundträger 3 zwischen einer Ruhelage, abgebildet in den Fig. 2a, 6a, 9 und 9a, und der u. a. in den Fig. 1, 1a, 2 und 3 dargestellten Crashlage verlagerbar ist. Die Längsverschiebbarkeit des Grundträgers 3 gegenüber der Fahrzeugsitzschiene 2 wird dabei dadurch erreicht, dass sich das Befestigungselement 18 durch ein Langloch 21 in der Fahrzeugsitzschiene 2 erstreckt, wobei die Länge des Langlochs 21 den Verschiebeweg der Fahrzeugsitzschiene 2 gegenüber dem Grundträger 3 bestimmt.

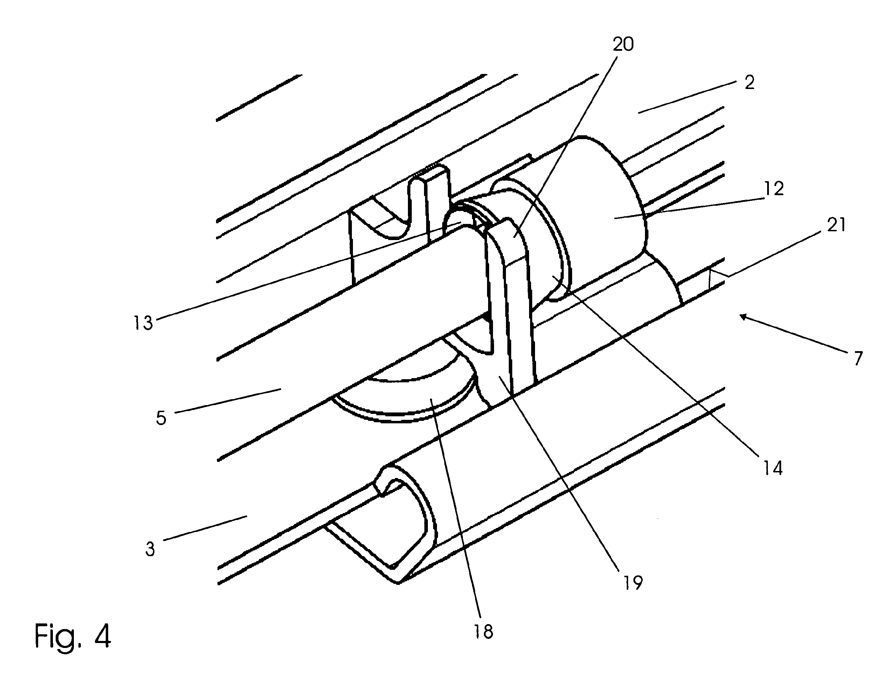

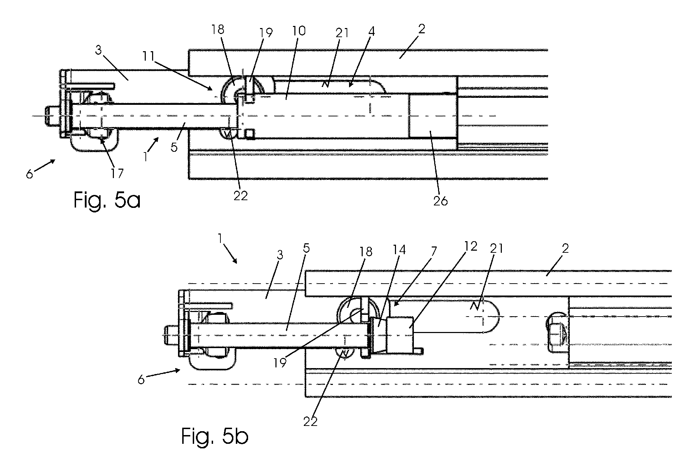

Um eine Bewegung der Fahrzeugsitzschiene 2 durch den Crashantrieb 1 zu erreichen, weist der Crashantrieb 1 eine Antriebseinheit 4 auf, über die der Crashantrieb 1 ortsfest mit der Fahrzeugsitzschiene 2 verbunden ist. Die Antriebseinheit 4 dient zur Verlagerung eines verschiebbar in einer Zylindereinheit 10 der Antriebseinheit 4 gelagerten Kolbenelements 5. Eine Aktivierung der Antriebseinheit 4 bewirkt eine Verlagerung des Kolbenelements 5 aus der in den Fig. 2a, 6a, 9 und 9a dargestellten Ablageposition des Kolbenelements 5 in die in den Fig. 1 - 2,3 - 5a sowie 6 - 11a dargestellten Stellposition des Kolbenelements 5, in der der Grundträger 3 durch das Kolbenelement 5 aus seiner Ruhelage in die Crashlage verschoben ist. Aufgrund der sich aus der Befestigung ergebenden Abstützung der Antriebseinheit 4 an der Fahrzeugsitzschiene 2 und der Befestigung des Grundträgers 3 an dem Fahrzeugboden erfolgt durch eine Verlagerung des Kolbenelements 5 aus der Ablageposition in die Stellposition eine Längsverschiebung der Sitzschiene 2 gegenüber dem Grundträger 3 in - bezogen auf die Einbaulage an einem hier nicht dargestellten Fahrzeug - Richtung der Fahrzeugfront.

Zur Verlagerung des Kolbenelements 5 weist die Antriebseinheit 4 einen im Bereich eines Halters 26 angeordneten pyrotechnischen Aktuator 8 auf, welcher derart mit der Zylindereinheit 10 verbunden ist, dass eine Aktivierung des pyrotechnischen Aktuators 8 eine schlagartige Erhöhung des Drucks in einem im Inneren der Zylindereinheit 10 ausgebildeten Druckraum 9 hervorruft. Die schlagartige, mit der Aktivierung des pyrotechnischen Aktuators 8 einhergehende Druckerhöhung bewirkt eine Verstellung des Kolbenelements 5 in Richtung des offenen Endes 11 der Zylindereinheit 10. Um diese Verstellung des Kolbenelements 5 für eine Verlagerung des Grundträgers 3 relativ gegenüber der Fahrzeugsitzschiene 2 zu nutzen, ist es zunächst erforderlich, die zwischen dem Grundträger 3 und der Fahrzeugsitzschiene 2 bestehende Verriegelung durch eine Verriegelungseinheit 6 aufzuheben.

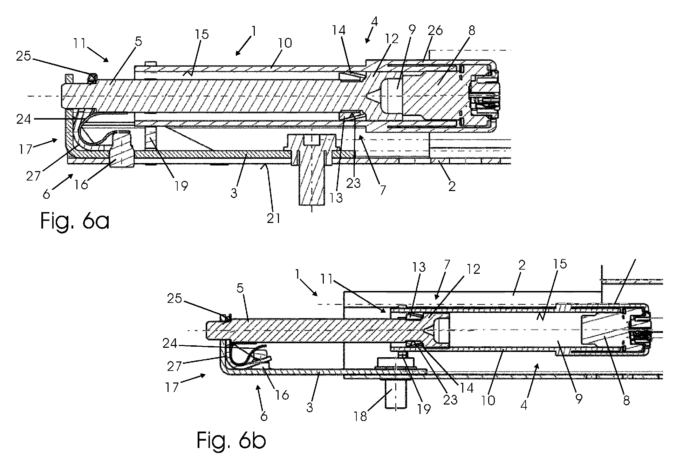

Die Verriegelungseinheit 6 dient dazu, im normalen Fahrbetrieb eine Lagesicherung der Fahrzeugsitzschiene 2 über den Grundträger 3 an dem Fahrzeugboden zu gewährleisten. Die Verriegelungseinheit 6 weist hierzu zwei Sperrstifte 16 auf, welche in ihrer Sperrlage von dem Grundträger 3 in eine Öffnung 22 sowie das Langloch 21 an der Fahrzeugsitzschiene 2 vorstehen und so den Grundträger 3 in Verschieberichtung der Fahrzeugsitzschiene 2 formschlüssig an der Fahrzeugsitzschiene 2 arretieren (vgl. Fig. 2a). Um eine relative Verlagerung des Grundträgers 3 gegenüber der Fahrzeugsitzschiene 2 zu ermöglichen ist es somit zunächst erforderlich, die Sperrstifte 16 derart in Richtung auf den Grundträger 3 zu verlagern, dass diese mit dem Langloch 21 und der Öffnung 22 außer Eingriff gelangen. Hierzu dient eine Betätigungseinheit 17, welche einen Bügel 27 aufweist, der einenends mit den Sperrstiften 16 und anderenends mit einem Absatz 25 an dem der Zylindereinheit 10 abgewandten Ende des Kolbenelements 5 zusammenwirkt. Eine Verlagerung des Bügels 27 aus der in Fig. 6a dargestellten Position in die bspw. in Fig. 6b dargestellte Position bewirkt eine Verlagerung der Sperrstifte 16 entgegen deren durch eine Feder 24 aufgebrachte Federvorspannung, so dass die Sperrstifte 16 mit der Fahrzeugsitzschiene 2 außer Eingriff gelangen.

Eine Verlagerung des Bügels 27 der Betätigungseinheit 17 zur Verlagerung der Sperrstifte 16 in ihre Freigabeposition erfolgt dabei zu Beginn der Bewegung des Kolbenelements 5 aus dessen Ablageposition in Richtung auf die Stellposition. Das Kolbenelement 5 ist hierzu in einem Bewegungsbereich aus der Ablageposition in Richtung auf die Stellposition soweit relativ gegenüber dem Grundträger 3 verschiebbar, bis der den Bügel 27 verstellende Absatz 25 an einem aufsteigenden Flansch des Grundträgers 3 zur Anlage kommt. Nach der in diesem Bewegungsabschnitt einhergehenden Entriegelung der Verriegelungseinheit 6 erfolgt eine Verlagerung des Kolbenelements 5 gemeinsam mit dem Grundträger 3, bis ein Anschlagelement 12 des Kolbenelements 5 innerhalb der Zylindereinheit 10 mit einem in den Innenraum der Zylindereinheit 10 hineinragenden Anschlagkörper 20 in Eingriff gelangt. Dabei gelangt der Anschlagkörper 20 nicht unmittelbar mit dem Anschlagkörper 20 in Kontakt, sondern zwischen dem Anschlagelement 12 und dem Anschlagkörper 20 ist eine Dämpfungseinheit 7 angeordnet, die aus einem Konusring 13 und einem Ringelement 14 gebildet ist.

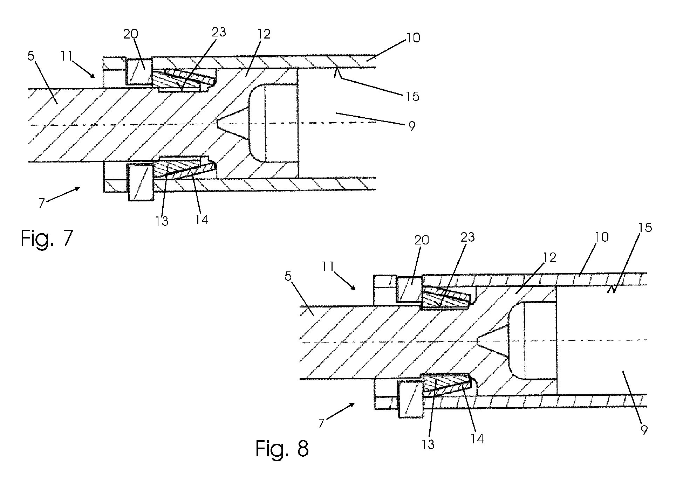

In der Ablageposition des Kolbenelements 5 sind das Ringelement 14 und der Konusring 13 derart an dem Anschlagelement 12 angeordnet, dass das Kolbenelement 5 weitestgehend reibungsfrei innerhalb der Zylindereinheit 10 bis in die Stellposition verlagert werden kann. Im Bereich um die Stellposition gelangt der Konusring 13 mit dem Anschlagkörper 20 in Kontakt, so dass bei einer Weiterbewegung das Anschlagelement 12 das Ringelement 14 auf den Konusring 13 aufschiebt (vgl. Fig. 8).

Im aufgeschobenen Zustand des Ringelements 14 auf den Konusring 13 vergrößert sich deren Gesamtdurchmesser, so dass einerseits der Konusring 13 auf das Kolbenelement 5 gepresst wird und dieser in einer Nut 23 angeordnet ist. Darüber hinaus kommt das Ringelement 14 an der Innenwand 15 der Zylindereinheit 10 zur Anlage, so dass im Falle einer Rückverlagerung des Kolbenelements 5 in Richtung auf dessen Ablageposition durch die Reibung zwischen dem Ringelement 14 und der Zylindereinheit 10 eine Dämpfungswirkung erzielt wird.

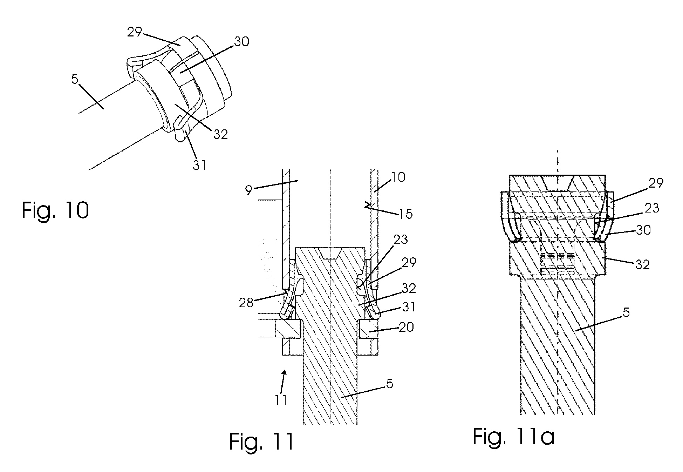

In den Fig. 10 - 11a ist eine alternative Ausführungsform der Dämpfungseinheit 7 dargestellt. Hierbei ist im Bereich des offenen Endes 11 der Zylindereinheit 10 ein Dämpfungselement 29 an dem Anschlagkörper 20 anliegend angeordnet. Das Dämpfungselement 29 weist zwei diametral angeordnete Vorsprünge 31 auf, die in Öffnungen 28 der Zylindereinheit 10 hineinragen, so dass das Dämpfungselement 29 dadurch ein Übermaß gegenüber der Innenwand 15 aufweist. Im Bereich um die Stellposition des Antriebskörpers 5 gelangt das Dämpfungselement 29 in formschlüssigen Eingriff mit dem Antriebskörper 5, wobei Rastnasen 30 in eine sich an einem Steg 32 anschließende Nut 23 eingreifen. Im Falle einer Rückverlagerung des Antriebskörpers 5 aus der Stellposition in Richtung auf die Ablageposition stützt sich das Dämpfungselement 29 an dem Steg 32 ab, so dass das Dämpfungselement 29 aufgrund des Übermaßes unter Verformung der Zylindereinheit 10 durch diese bewegt wird. Hierbei kann ein hohes Maß an Bewegungsenergie abgebaut werden.

Zur Befestigung des Grundträgers 3 an dem Fahrzeugboden dient eine Befestigungsschraube 18, die sich durch das Langloch 21 der Fahrzeugsitzschiene 2 erstreckt. Die Antriebseinheit 4 des Crashantriebs 1 ist über einen Befestigungssteg 19 mit der Fahrzeugsitzschiene 2 ortsfest verbunden.

## Patentansprüche

1. Crashantrieb (1) für eine längsverschiebbar an einem Fahrzeugboden angeordnete Fahrzeugsitzschiene (2), mit
- einem mit dem Fahrzeugboden verbindbaren, zwischen einer Ruhelage und einer Crashlage längsverschiebbar an der Fahrzeugsitzschiene anordbaren Grundträger (3),
- einer ortsfest mit der Fahrzeugsitzschiene verbindbaren Antriebseinheit (4) und
- einem durch die Antriebseinheit zwischen einer Ablageposition und einer Stellposition verlagerbar an der Antriebseinheit angeordneten Antriebskörper (5), der derart mit dem Grundträger verbunden ist, dass eine Verstellung des Antriebskörpers aus der Ablageposition in die Stellposition eine Verlagerung des Grundträgers aus der Ruhelage in die Crashlage bewirkt wobei die Antriebseinheit (4)
- einen pyrotechnischen Aktuator (8) aufweist, der derart ausgebildet ist, dass dessen Aktivierung eine Verlagerung des Antriebskörpers (5) aus der Ablageposition in die Stellposition bewirkt,
**dadurch gekennzeichnet, dass** der Crashantrieb eine die Bewegung des Grundträgers (3) aus der Crashlage in Richtung auf die Ruhelage dämpfende Dämpfungseinheit (7) aufweist.

2. Crashantrieb nach Anspruch 1, **gekennzeichnet durch** eine den Grundträger (3) in der Ruhelage in Verstellrichtung formschlüssig an der Fahrzeugsitzschiene (2) festlegende Verriegelungseinheit (6), die zwischen einer Sperrlage und einer Freigabestellung verstellbar ist.

3. Crashantrieb nach einem der vorhergehenden Ansprüche, **dadurch gekennzeichnet, dass** der pyrotechnische Aktuator (8) druckdicht mit einer einen Druckraum (9) aufweisenden Zylindereinheit (10) verbunden ist, innerhalb dem ein als Kolbenelement (5) ausgebildeter Antriebskörper längsverschiebbar gelagert ist.

4. Crashantrieb nach einem der vorhergehenden Ansprüche, **dadurch gekennzeichnet, dass** der Antriebskörper (5) im Bereich um die Stellposition derart mit der Dämpfungseinheit (7) zusammenwirkt, dass diese aus einer wirkungslosen Position in eine Wirkposition verstellt wird.

5. Crashantrieb nach einem der vorhergehenden Ansprüche, **dadurch gekennzeichnet, dass** die Dämpfungseinheit (7) im Bereich des offenen Endes (11) der Zylindereinheit (10) innerhalb des Druckraums (9) derart mit einem Anschlagelement (12) des Antriebskörpers (5) im Bereich der Stellposition zusammenwirkt, dass die Dämpfungseinheit (7) in die Wirkposition verstellt wird.

6. Crashantrieb nach einem der vorhergehenden Ansprüche, **dadurch gekennzeichnet, dass** die Dämpfungseinheit (7) einen koaxial zum Antriebskörper (5) angeordneten Konusring (13) sowie ein im Bereich der Stellposition mit dem Antriebskörper (5) in Eingriff bringbares und dadurch auf den Konusring (13) aufschiebbares Ringelement (14) aufweist, das derart ausgebildet ist, dass im aufgeschobenen Zustand das Ringelement (14) und der Konusring (13) kraft- und/oder formschlüssig mit dem Antriebskörper (5) und der Innenwand (15) der Zylindereinheit (10) in Eingriff befindlich sind.

7. Crashantrieb nach einem der vorhergehenden Ansprüche, **dadurch gekennzeichnet, dass** die Dämpfungseinheit (7) einen im Bereich des offenen Endes (11) der Zylindereinheit (10) angeordnetes, an der Innenwand (15) anliegendes und/oder abschnittsweise in eine Öffnung (28) der Zylindereinheit (10) vorstehendes Dämpfungselement (29) aufweist, wobei der Antriebskörper (5) und das Dämpfungselement (29) derart ausgebildet sind, dass diese im Bereich der Stellposition des Antriebskörpers (5) kraft- und/oder formschlüssig in Eingriff gelangen.

8. Crashantrieb nach einem der vorhergehenden Ansprüche, **dadurch gekennzeichnet, dass** die Verriegelungseinheit (6) mindestens ein, vorzugsweise zwei Verriegelungselemente (16), insbesondere Sperrstifte aufweist, die zwischen der Sperrlage, in der das Verriegelungselement (16) von dem Grundträger (3) in Richtung auf die Fahrzeugsitzschiene (2) vorsteht und der Freigabestellung, in der das Verriegelungselement (16) in Richtung auf den Grundträger (3) rückverlagert ist, verstellbar ist.

9. Crashantrieb nach einem der vorhergehenden Ansprüche, **dadurch gekennzeichnet, dass** das Verriegelungselement (16) in Richtung auf die Sperrlage vorgespannt ist.

10. Crashantrieb nach einem der vorhergehenden Ansprüche, **gekennzeichnet durch** eine die Verriegelungseinheit (6) verstellende Betätigungseinheit (17), die mit der Verriegelungseinheit (6) und dem Antriebskörper (5) derart in Wirkverbindung befindlich ist, dass eine Verstellung des Antriebskörpers (5) aus der Ablageposition in Richtung auf die Stellposition eine Verstellung der Verriegelungseinheit (6) in die Freigabestellung bewirkt.

11. Crashantrieb nach einem der vorhergehenden Ansprüche, **dadurch gekennzeichnet, dass** der Antriebskörper (5) im Bereich um die Ablageposition relativ gegenüber dem Grundträger (3) verstellbar ist.

12. Crashantrieb nach einem der vorhergehenden Ansprüche, **dadurch gekennzeichnet, dass** der Grundträger (3) ein Befestigungselement (18), vorzugsweise eine Befestigungsschraube zur Lagesicherung des Grundträgers (3) an einem Fahrzeugboden aufweist.

13. Crashantrieb nach einem der vorhergehenden Ansprüche, **dadurch gekennzeichnet, dass** die Antriebseinheit (4), insbesondere die Zylindereinheit (10) Befestigungsmittel (19) zur Lagesicherung der Antriebseinheit (4) an der Fahrzeugsitzschiene (2) aufweist.

14. Fahrzeugsitzschiene mit einem Crashantrieb nach einem der Ansprüche 1 bis 13, **dadurch gekennzeichnet, dass** ein Befestigungselement (18) eines Grundträgers (3), insbesondere eine Befestigungsschraube des Crashantriebs (1) innerhalb eines Langloches (21) eines Bodenbereichs der Fahrzeugsitzschiene (2) angeordnet ist.

15. Fahrzeugsitzschiene nach Anspruch 14, **dadurch gekennzeichnet, dass** ein Verriegelungselement (16), insbesondere ein Sperrstift einer Verriegelungseinheit (6) des Crashantriebs (1) in einer Sperrlage in einer entsprechenden Öffnung (22) an der Fahrzeugsitzschiene (2) angeordnet ist.

## Claims

1. Crash drive (1) for a vehicle-seat rail (2) which is arranged in a longitudinally displaceable manner on a vehicle floor, said crash drive having:
- a basic carrier (3) which can be connected to the vehicle floor and can be arranged on the vehicle-seat rail so as to be longitudinally displaceable between an inoperative location and a crash location;
- a drive unit (4) which can be connected to the vehicle-seat rail in a fixed manner; and
- a drive body (5) which is arranged on the drive unit so as to be movable, by said drive unit, between a storage position and an adjusting position,
and which is connected to the basic carrier in such a way that a shifting of the drive body from the storage position into the adjusting position brings about a moving of the basic carrier from the inoperative location into the crash location;
wherein the drive unit (4)
- has a pyrotechnic actuator (8) which is designed in such a way that activation thereof brings about a moving of the drive body (5) from the storage position into the adjusting position,
**characterised in that** the crash drive has a damping unit (7) which damps the movement of the basic carrier (3) from the crash location towards the inoperative position.

2. Crash drive according to Claim 1, **characterised by** an interlocking unit (6) which immobilises the basic carrier (3) on the vehicle-seat rail (2) in the inoperative location in the direction of shifting in a form-locking manner, and which can be shifted between a blocking location and a releasing position.

3. Crash drive according to one of the preceding claims, **characterised in that** the pyrotechnic actuator (8) is connected in a pressure-tight manner to a cylinder unit (10) having a pressure space (9) within which a drive body designed as a piston element (5) is mounted in a longitudinally displaceable manner.

4. Crash drive according to one of the preceding claims, **characterised in that** the drive body (5) interacts, in the region around the adjusting position, with the damping unit (7) in such a way that said damping unit is shifted from an inactive position into an active position.

5. Crash drive according to one of the preceding claims, **characterised in that**, in the region of the open end (11) of the cylinder unit (10), the damping unit (7) interacts, inside the pressure space (9), with a stop element (12) belonging to the drive body (5) in the region of the adjusting position in such a way that said damping unit (7) is shifted into the active position.

6. Crash drive according to one of the preceding claims, **characterised in that** the damping unit (7) has a cone ring (13), which is arranged coaxially in relation to the drive body (5), and also a ring element (14) which can be brought into engagement with the drive body (5) in the region of the adjusting position and can thereby be pushed onto the cone ring (13) and which is designed in such a way that, in the pushed-on state, the ring element (14) and the cone ring (13) are located in engagement, in a force-locking and/or form-locking manner, with the drive body (5) and the inner wall (15) of the cylinder unit (10).

7. Crash drive according to one of the preceding claims, **characterised in that** the damping unit (7) has a damping element (29) which is arranged in the region of the open end (11) of the cylinder unit (10) and rests against the inner wall (15) and/or, in certain sections, protrudes into an aperture (28) in the cylinder unit (10), the drive body (5) and the damping element (29) being designed in such a way that they come into engagement in a force-locking and/or form-locking manner in the region of the adjusting position of the drive body (5).

8. Crash drive according to one of the preceding claims, **characterised in that** the interlocking unit (6) has at least one, and preferably two, interlocking elements (16), in particular blocking pins, which can be shifted between the blocking location, in which the interlocking element (16) protrudes from the basic carrier (3) towards the vehicle-seat rail (2), and the releasing position, in which said interlocking element (16) is moved back towards the basic carrier (3).

9. Crash drive according to one of the preceding claims, **characterised in that** the interlocking element (16) is pretensioned towards the blocking location.

10. Crash drive according to one of the preceding claims, **characterised by** an actuating unit (17) which shifts the interlocking unit (6) and is located in operative connection with said interlocking unit (6) and the drive body (5) in such a way that a shifting of said drive body (5) from the storage position towards the adjusting position brings about a shifting of the interlocking unit (6) into the releasing position.

11. Crash drive according to one of the preceding claims, **characterised in that** the drive body (5) can be shifted, relative to the basic carrier (3), in the region around the storage position.

12. Crash drive according to one of the preceding claims, **characterised in that** the basic carrier (3) has a fastening element (18), preferably a fastening screw, for securing said basic carrier (3), location-wise, on a vehicle floor.

13. Crash drive according to one of the preceding claims, **characterised in that** the drive unit (4), in particular the cylinder unit (10), has fastening means (19) for securing said drive unit (4), location-wise, on the vehicle-seat rail (2).

14. Vehicle-seat rail having a crash drive according to one of Claims 1 to 13, **characterised in that** a fastening element (18) belonging to a basic carrier (3), in particular a fastening screw belonging to the crash drive (1), is arranged inside a slot (21) in a floor region of the vehicle-seat rail (2).

15. Vehicle-seat rail according to Claim 14, **characterised in that** an interlocking element (16), in particular a blocking pin belonging to an interlocking unit (6) of the crash drive (1), is arranged, in a blocking location, in a corresponding aperture (22) on the vehicle-seat rail (2).

## Revendications

1. Entraînement en collision (1) destiné à une glissière de siège de véhicule (2) disposée au niveau d'un plancher de véhicule de manière à pouvoir être déplacée par coulissement de manière longitudinale, comprenant
- un support de base (3) pouvant être relié au plancher de véhicule, pouvant être disposé au niveau de la glissière de siège de véhicule de manière à pouvoir être déplacé par coulissement de manière longitudinale entre une position de repos et une position de collision,
- une unité d'entraînement (4) pouvant être reliée de manière stationnaire à la glissière de siège de véhicule, et
- un corps d'entraînement (5) disposé au niveau de l'unité d'entraînement de manière à pouvoir être déplacé par l'unité d'entraînement entre une position de rangement et une position de réglage, lequel corps d'entraînement est relié au support de base de telle manière qu'un ajustement du corps d'entraînement depuis la position de rangement dans la position de réglage entraîne un déplacement du support de base depuis la position de repos dans la position de collision, sachant que l'unité d'entraînement (4)
- présente un actionneur (8) pyrotechnique, qui est réalisé de telle manière que son activation entraîne un déplacement du corps d'entraînement (5) de la position de rangement dans la position de réglage, **caractérisé en ce que** l'entraînement en collision présente une unité d'amortissement (7) amortissant le mouvement du support de base (3) depuis la position de collision en direction de la position de repos.

2. Entraînement en collision selon la revendication 1, **caractérisé par** une unité de verrouillage (6) immobilisant le support de base (3) dans la position de repos dans la direction d'ajustement par complémentarité de forme au niveau de la glissière de siège de véhicule (2), laquelle unité de verrouillage peut être ajustée entre une position de blocage et une position de déblocage.

3. Entraînement en collision selon l'une quelconque des revendications précédentes, **caractérisé en ce que** l'actionneur (8) pyrotechnique est relié de manière étanche aux pressions à une unité de cylindre (10) présentant un espace de pression (9), à l'intérieur duquel un corps d'entraînement réalisé sous la forme d'un élément formant piston (5) est monté de manière à pouvoir être déplacé par coulissement de manière longitudinale.

4. Entraînement en collision selon l'une quelconque des revendications précédentes, **caractérisé en ce que** le corps d'entraînement (5) coopère avec l'unité d'amortissement (7) dans la zone autour de la position de réglage de telle manière que ladite unité d'amortissement est ajustée depuis une position sans action dans une position active.

5. Entraînement en collision selon l'une quelconque des revendications précédentes, **caractérisé en ce que** l'unité d'amortissement (7) coopère avec un élément formant butée (12) du corps d'entraînement (5) dans la zone de la position de réglage dans la zone de l'extrémité (11) ouverte de l'unité de cylindre (10) à l'intérieur de l'espace de pression (9) de telle manière que l'unité d'amortissement (7) est ajustée dans la position active.

6. Entraînement en collision selon l'une quelconque des revendications précédentes, **caractérisé en ce que** l'unité d'amortissement (7) présente une bague conique (13) disposée de manière coaxiale par rapport au corps d'entraînement (5) ainsi qu'un élément de bague (14) pouvant être amené en prise dans la zone de la position de réglage avec le corps d'entraînement (5) et pouvant être enfilé de ce fait sur la bague conique (13), lequel élément de bague est réalisé de telle manière que, dans l'état enfilé, l'élément de bague (14) et la bague conique (13) sont en prise à force et/ou par complémentarité de forme avec le corps d'entraînement (5) et avec la paroi intérieure (15) de l'unité de cylindre (10).

7. Entraînement en collision selon l'une quelconque des revendications précédentes, **caractérisé en ce que** l'unité d'amortissement (7) présente un élément d'amortissement (29) disposé dans la zone de l'extrémité (11) ouverte de l'unité de cylindre (10), reposant au niveau de la paroi intérieure (15) et/ou faisant saillie par endroits dans une ouverture (28) de l'unité de cylindre (10), sachant que le corps d'entraînement (5) et l'élément d'amortissement (29) sont réalisés de telle manière qu'ils parviennent en prise à force et/ou par complémentarité de forme dans la zone de la position de réglage du corps d'entraînement (5).

8. Entraînement en collision selon l'une quelconque des revendications précédentes, **caractérisé en ce que** l'unité de verrouillage (6) présente au moins un, de préférence deux éléments de verrouillage (16), en particulier des tiges de blocage, qui peuvent être ajustés entre la position de blocage, dans laquelle l'élément de verrouillage (16) fait saillie du support de base (3) en direction de la glissière de siège de sécurité (2), et la position de déblocage, dans laquelle l'élément de verrouillage (16) est déplacé dans sa position initiale en direction du support de base (3).

9. Entraînement en collision selon l'une quelconque des revendications précédentes, **caractérisé en ce que** l'élément de verrouillage (16) est précontraint en direction de la position de blocage.

10. Entraînement en collision selon l'une quelconque des revendications précédentes, **caractérisé par** une unité d'actionnement (17) ajustant l'unité de verrouillage (6), laquelle se trouve en liaison active avec l'unité de verrouillage (6) et le corps d'entraînement (5) de telle manière qu'un ajustement du corps d'entraînement (5) depuis la position de rangement en direction de la position de réglage entraîne un ajustement de l'unité de verrouillage (6) dans la position de déblocage.

11. Entraînement en collision selon l'une quelconque des revendications précédentes, **caractérisé en ce que** le corps d'entraînement (5) peut être ajusté dans la zone autour de la position de rangement par rapport au support de base (3).

12. Entraînement en collision selon l'une quelconque des revendications précédentes, **caractérisé en ce que** le support de base (3) présente un élément de fixation (18), de préférence une vis de fixation servant à bloquer en position le support de base (3) au niveau d'un plancher de véhicule.

13. Entraînement en collision selon l'une quelconque des revendications précédentes, **caractérisé en ce que** l'unité d'entraînement (4), en particulier l'unité de cylindre (10), présente des moyens de fixation (19) servant à bloquer en position l'unité d'entraînement (4) au niveau de la glissière de siège de véhicule (2).

14. Glissière de siège de véhicule comprenant un entraînement en collision selon l'une quelconque des revendications 1 à 13, **caractérisée en ce qu'**un élément de fixation (18) d'un support de base (3), en particulier une vis de fixation de l'entraînement en collision (1), est disposé à l'intérieur d'un trou oblong (21) d'une zone au plancher de la glissière de siège de véhicule (2).

15. Glissière de siège de véhicule selon la revendication 14, **caractérisée en ce qu'**un élément de verrouillage (16), en particulier une tige de blocage, d'une unité de verrouillage (6) de l'entraînement en collision (1), est disposée dans une position de blocage dans une ouverture (22) correspondante au niveau de la glissière de siège de véhicule (2).
